# EUROPEAN PATENT APPLICATION

(11) **EP 2 423 737 A1**
(43) Date of publication of application: **29.02.2012**
(21) Application number: 11179175.2
(22) Date of filing: 29.08.2011
(51) Int. Cl.: G02F 1/13357, F21V 19/00, H01R 33/02

(54) **Lamp socket and liquid crystal module**

(30) Priority: 31.08.2010 JP 2010193422
(71) Applicant: Funai Electric Co., Ltd., Daito-shi, Osaka 574-0013 (JP)
(72) Inventor: Maruno, Masashi, Daito-shi, Osaka 574-0013 (JP)
(74) Representative: Grünecker, Kinkeldey, Stockmair & Schwanhäusser

(57) **Abstract**

A lamp socket includes a socket body, first and second lamp support components, and first and second wire support components. The socket body has first and second wiring slits. The first and second wiring slits extend between first and second side surfaces of the socket body on one of third and fourth side surface of the socket body, respectively. The first and second lamp support components are disposed at opposite end portions of the socket body in a lengthwise direction of the lamp socket, respectively. The first wire support component has a first groove that is located spaced away from the second side surface of the socket body. The second wire support component has a second groove that is located spaced away from the second side surface of the socket body.

## Description

### CROSS-REFERENCE TO RELATED APPLICATIONS

This application claims priority to Japanese Patent Application No. 2010-193422 filed on August 31, 2010. The entire disclosure of Japanese Patent Application No. 2010-193422 is hereby incorporated herein by reference.

### BACKGROUND

### Field of the Invention

The present invention generally relates to a lamp socket. More specifically, the present invention relates to a lamp socket that is attached to a U-shaped cold-cathode tube. Background Information

A conventional lamp socket is attached to end portions of a U-shaped cold-cathode tube inside a liquid crystal module. The lamp socket includes a pair of left and right accommodating concave components for accommodating and holding the end portions of the U-shaped cold-cathode tube. The accommodating concave components are formed at end portions of the lamp socket. Holes for drawing lamp wires out below the lamp socket are formed in the bottom faces of the accommodating concave components, respectively. The lamp wires are connected by solders to pin terminals at the end portions of the U-shaped cold-cathode tube.

Also known is a liquid crystal display device in which spacers are attached to end portions of a U-shaped cold-cathode tube. With this liquid crystal display device, terminals of the U-shaped cold-cathode tube and wire lines are connected inside the spacers, thereby changing the direction of leading pulled ends of the wire lines to align with the edges of a box-shaped frame (see Japanese Laid-open Patent Application Publication No. 2006-330162, for example).

Also known is a direct-type backlight device in which light-emitting tubes are fitted into light-emitting tube holder parts of a rubber holder and held in place in a lamp holder. With this backlight device, lead wires of the light-emitting tubes and a connector are passed through a connector through-hole of the rubber holder. The lead wires are passed through a lead wire through-hole in a wire separator of the rubber holder, thereby separating the lead wires (see Japanese Laid-open Patent Application Publication No. 2006-253116, for example).

Also known is a lamp holder in which lamp-fitting holes for fitting end portions of a lamp are formed in a holder main body. With this lamp holder, a lead wire holding hole for holding lead wires that are connected to one of the end portions on one side of the lamps is formed in an engaging part protruding in an L shape from the holder main body. Furthermore, a lead wire holding part for holding lead wires led out from the other end portions of the lamps is formed in an underside of the holder main body and engaging part (see Japanese Laid-open Patent Application Publication No. 2007-35481, for example).

### SUMMARY

With the conventional lamp socket mentioned above, the lamp wires connected by solders to the pin terminals of the U-shaped cold-cathode tube are drawn downward from the lamp socket and connected to the connector in a state of being suspended from the holes that is formed in the bottom faces of the accommodating concave components. It has been discovered that when the connector or the lamp wires are pulled firmly during the assembly, there is a risk of a large load being imposed on the pin terminals of the U-shaped cold-cathode tube. As a result, the end portions of the cold-cathode tube may be damaged, or the solders are peeled off, thereby compromising the connection. Moreover, the connecting work of the pin terminals of the U-shaped cold-cathode tube and the lamp wires by soldering is performed after the lamp wires are inserted through the holes of the lamp socket. Thus, the assembly work is not easy.

Furthermore, it has also been discovered that the conventional liquid crystal device, the conventional backlight device and the conventional lamp holder mentioned above, are not provided with means for reducing the load so that a large load is not imposed on the end portions or terminals of the cold-cathode tube when a large tension force is applied to the lead wires. Thus, there is a risk of the end portions of the cold-cathode tube being damaged or the connection being compromised.

The present invention was conceived in light of the above-mentioned problems. One object of the present invention is to provide a lamp socket with which even when a pulling force acts on a lamp wire connected to a pin terminal of a cold-cathode tube, the connection is prevented from coming loose.

In accordance with one aspect of the present disclosure, a lamp socket includes a socket body, first and second lamp support components, and first and second wire support components. The socket body has a first side surface that faces in a mounting direction of the socket body, a second side surface that oppositely faces from the first side surface, a third side surface that extends between the first and second side surface, and a fourth side surface that oppositely faces from the third surface. The socket body includes first and second wiring slits. The first and second wiring slits extend between the first and second side surfaces of the socket body on one of the third and fourth side surfaces of the socket body, respectively. The first and second lamp support components are disposed at opposite end portions of the socket body in a lengthwise direction of the lamp socket, respectively. Each of the first and second lamp support components has a hollow area that extends in a widthwise direction of the lamp socket that is perpendicular to the lengthwise direction of the lamp socket. The first wire support component is disposed between the first wiring slit of the socket body and the first lamp support component in the lengthwise direction of the lamp socket. The first wire support component has a first groove that is located spaced away from the second side surface of the socket body. The second wire support component is disposed between the second wiring slit of the socket body and the second lamp support component in the lengthwise direction of the lamp socket. The second wire support component has a second groove that is located spaced away from the second side surface of the socket body.

These and other objects, features, aspects and advantages will become apparent to those skilled in the art from the following detailed description, which, taken in conjunction with the annexed drawings, discloses a preferred embodiment.

### BRIEF DESCRIPTION OF THE DRAWINGS

Referring now to the attached drawings which form a part of this original disclosure:

FIG. 1 is an exploded perspective view of a liquid crystal module having a lamp socket in accordance with one embodiment;

FIG. 2 is an enlarged, partial perspective view of the lamp socket illustrated in FIG. 1 showing that the lamp socket is attached to a U-shaped cold-cathode tube;

FIG. 3 is an enlarged, partial front elevational view of the lamp socket illustrated in FIG. 1;

FIG. 4 is a cross-sectional view of the lamp socket taken along IV-IV line in FIG. 3; and

FIG. 5 is a cross-sectional view of the lamp socket taken along V-V line in FIG. 3.

### DETAILED DESCRIPTION OF EMBODIMENTS

A preferred embodiment will now be explained with reference to the drawings. It will be apparent to those skilled in the art from these disclosures that the following descriptions of the preferred embodiment are provided for illustration only and not for the purpose of limiting the invention as defined by the appended claims and their equivalents.

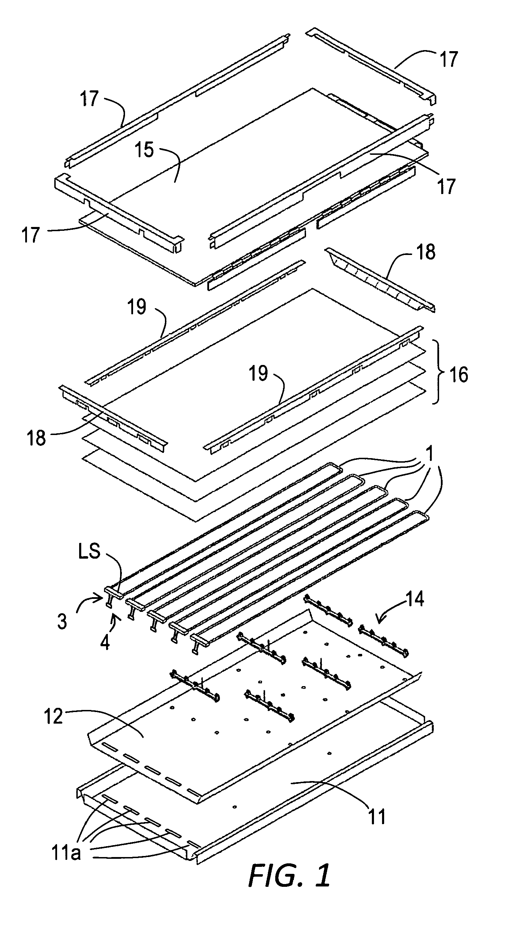

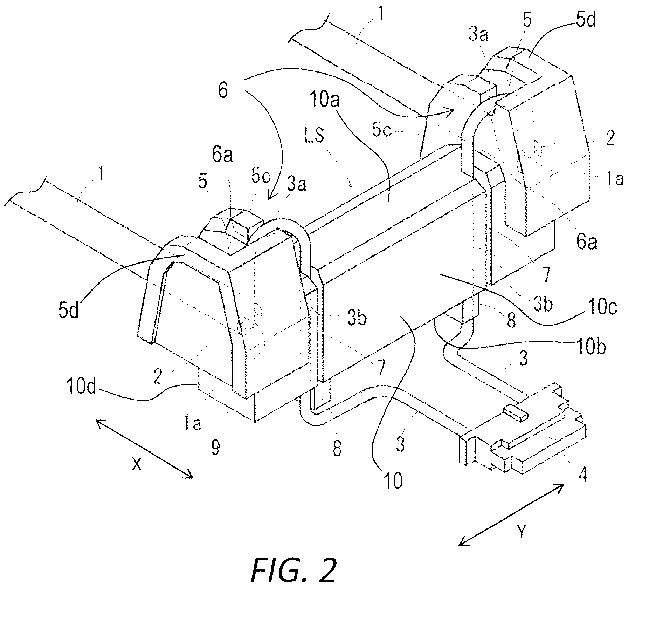

As seen in FIGS. 1 and 2, a liquid crystal module basically includes a plurality of (five in FIG. 1) U-shaped cold-cathode tubes 1, a plurality of (ten in FIG. 1) lamp wires 3, a plurality of (five in FIG. 1) connectors 4, a plurality of (five in FIG. 1) lamp sockets LS, a rear frame 11, a light reflecting sheet 12, a plurality of lamp holders 14, a liquid crystal panel 15, a plurality of (three in FIG. 1) optical sheets 16, a plurality of (four in FIG. 1) bezels 17, a pair of left and right lamp frames 18, and a pair of bezel guides 19. A liquid crystal module is a large module that is installed in a wide-screen liquid crystal television set, personal computers and other electronic devices.

As illustrated in FIG. 2, each of the U-shaped cold-cathode tubes 1 has two pin terminals 1a at both ends of each of the U-shaped cold-cathode tubes 1. The term "U-shaped cold-cathode tube" used here encompasses not only a single cold-cathode tube that has been bent in a U shape, but also what is known as a "semi-U-shaped cold-cathode tube" in which two straight cold-cathode tubes are lined up in parallel and pin terminals at one end of these are connected with a connecting plate.

As illustrated in FIGS. 1 and 2, the lamp wires 3 are fixedly and electrically coupled to the pin terminals 1a of each of the U-shaped cold-cathode tubes 1, respectively. In particular, the lamp wires 3 are fixedly coupled to the pin terminals 1 a by solders 2, respectively. The lamp wires 3 are also fixedly and electrically coupled to the connectors 4, respectively. The connectors 4 are electrically coupled to an electric power supply (not shown), and supply electric power to the U-shaped cold-cathode tubes 1 via the lamp wires 3. The rear frame 11 is made of sheet metal. The rear frame 11 has a shallow box shape. The light reflecting sheet 12 is provided on an inside of the rear frame 11. The U-shaped cold-cathode tubes 1 are arranged on the light reflecting sheet 12 within the rear frame 11. and are supported by the lamp holders 14. The optical sheets 16 are disposed above the U-shaped cold-cathode tubes 1. Furthermore, the liquid crystal panel 15 is disposed above the optical sheets 16. The liquid crystal module is a direct backlit type liquid crystal module. The edges of the optical sheets 16 are placed on top faces of top and bottom side plates of the rear frame 11, and are held down by the pair of bezel guides 19 attached to the top and bottom side plates. The four edges of the liquid crystal panel 15 are placed over the bezel guides 19 and the left and right lamp frames 18, and are held down and fixed by four bezels 17.

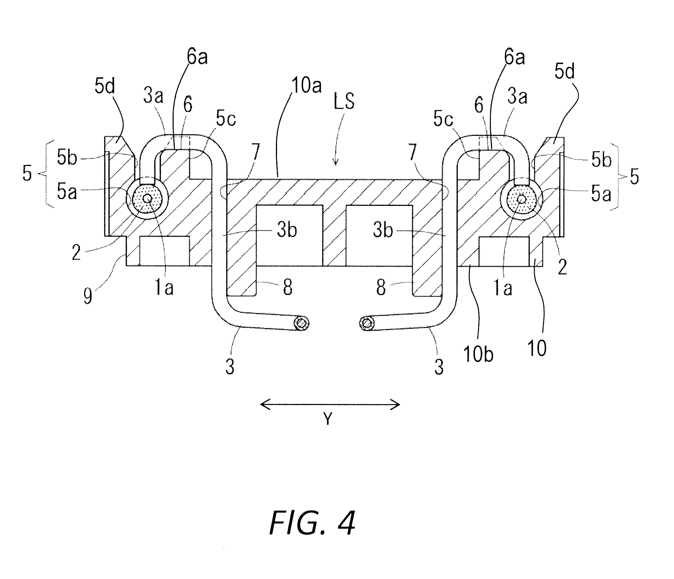

Referring to FIGS. 2 to 5, the lamp sockets LS will be discussed in detail. The lamp sockets LS are fixedly coupled to mounting holes 11a of the rear frame 11. The lamp sockets LS supports the U-shaped cold-cathode tubes 1 relative to the rear frame 11. Furthermore, the lamp sockets LS guides the lamp wires 3 connected to the U-shaped cold-cathode tubes 1 to a rear side of the rear frame 11 through the mounting holes 1 1 a of the rear frame 11. The lamp sockets LS are identical with each other. The lamp sockets LS are made of synthetic rubber, a synthetic resin, or another elastomer which has a high coefficient of friction and which is elastic. Each of the lamp sockets LS is integrally formed as a one-piece, unitary member. Each of the lamp sockets LS includes a socket body 10 and a pair of accommodating concave components 5 (e.g., first and second lamp support components). The socket body 10 has an upper surface 10a (second side surface), a lower surface 10b (first side surface), an outer side surface 10c (third side surface), and an inner side surface 10d (fourth side surface). The lower surface 10b faces in a mounting direction of the socket body 10. The upper surface 10a oppositely faces from the lower surface 10b. The outer side surface 10c extends between the upper and lower surface 10a and 10b. The inner side surface 10d oppositely faces from the outer side surface 10c. The accommodating concave components 5 are formed at lengthwise end portions (e.g., opposite end portions) of the socket body 10. The accommodating concave components accommodate and hold end portions of the U-shaped cold-cathode tube 1. Each of the accommodating concave components 5 has inside and outside walls 5c and 5d that defines a circular cavity 5a (e.g., hollow area) and a slit 5b therebetween. The circular cavities 5a extends in a widthwise direction X of the lamp socket LS. The end portions of the U-shaped cold-cathode tube 1 are fitted into the circular cavities 5a. The slits 5b are formed on top faces of the accommodating concave components 5, respectively, such that the slits 5b communicates with top sides of the circular cavities 5a as illustrated in FIG. 4. The slits 5b also extend along the circular cavities 5a. The slits 5b have smaller widths in a lengthwise direction Y of the lamp socket LS than the diameters of the circular cavities 5a. The end portions of the U-shaped cold-cathode tube 1 and the pin terminals 1a are accommodated and held into the accommodating concave components 5 with a single operation. Specifically, the end portions of the U-shaped cold-cathode tube 1 with the pin terminals 1a are fitted into the circular cavities 5a from above while pushing the slits 5b open in the lengthwise direction Y of the lamp socket LS after the pin terminals 1 a are connected to the lamp wires 3 by the solders 2.

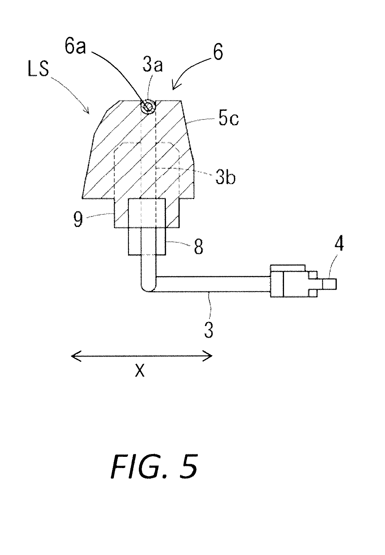

The lamp wires 3 are connected by the solders 2 to the pin terminals 1a at the end portions of the U-shaped cold-cathode tube 1. The lamp wires 3 are drawn slightly upward relative to connection portions between the lamp wires 3 and the pin terminals 1a, then bent back into upside-down U shapes as illustrated in FIG. 4. Furthermore, the lamp wires 3 are drawn downward of the lamp socket LS. The lamp wires 3 are fixedly and electrically coupled to the connector 4 at their distal ends. The accommodating concave components 5 further include wire supports 6 (e.g., wire support components), respectively. The wire supports 6 support the upside-down U-shaped bent parts 3a of the lamp wires 3 from below, respectively. The wire supports 6 are formed at top end portions of the inside walls 5c of the accommodating concave components 5, respectively. Inside surface of the inside walls 5c face a lengthwise center of the lamp socket LS, respectively. The wire supports 6 includes concave components (e.g., grooves) in which top portions of the upside-down U-shaped bent parts 3a of the lamp wires 3 are fitted. Supporting surfaces 6a (e.g., bottom surfaces) of the wire supports 6 are formed into curved surfaces that hold firmly against bottom halves of the top portions of the upside-down U-shaped bent parts 3a. Specifically, as illustrated in FIG. 5, each of the concave components have a curved cross sectional shape as viewed in the lengthwise direction Y of the lamp socket LS that corresponds to a cross sectional shape of the lamp wires 3. Therefore, there is a large amount of frictional resistance between the wire supports 6 and the upside-down U-shaped bent parts 3a, respectively when the lamp wires 3 are fitted into the wire supports 6. Furthermore, as illustrated in FIG. 4, the supporting surfaces 6a of the wire supports 6 are located away from the upper surface 10a. Specifically, the supporting surfaces 6a are located upward of the lamp socket LS relative to the upper surface 10a of the socket body 10. Furthermore, the supporting surfaces 6a of the wire supports 6 are located upward of center axes (or pin terminal 1a) of the end portions of the U-shaped cold-cathode tube 1.

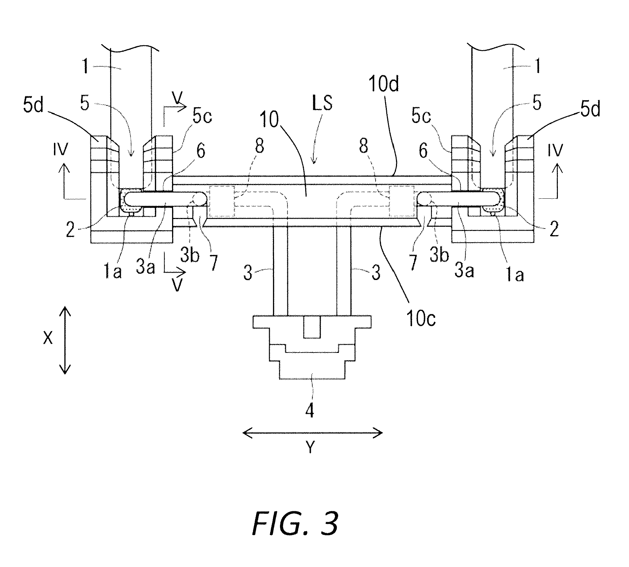

The socket body 10 of the lamp socket LS has a pair of vertical slits 7 (e.g., first and second wiring slits) on the outer side surface 10c of the socket body 10 at spaced apart locations. The vertical slits 7 extend between the upper and lower surfaces 10a and 10b of the socket body 10 on the outer side surface 10c of the socket body 10. The wire supports 6 are formed between the vertical slits 7 and the accommodating concave components 5, respectively, in the lengthwise direction Y. Wire intermediate parts 3b of the lamp wires 3, which continue from the upside-down U-shaped bent parts 3a, are fitted into the slits 7, respectively, from outside of the outer side surface 10c of the socket body 10 to be held apart. As illustrated in FIG. 3, to enable the slits 7 to hold the wire intermediate parts 3b of the lamp wires 3 in place from the sides without slack, the widths of the slits 7 in their base sides are substantially equal to the outside diameters of the lamp wires 3, and the width of the slits 7 in their open sides are smaller than the widths of their base sides so that the lamp wires 3 will not fall apart from the slits 7. The grooves of the wire supports 6 and the slits 7 are arranged to each other to define a pair of wiring paths of the lamp wires 3. The slits 7 are formed on the outer side surface 10c. However, alternatively, the slits 7 can be formed on the inner side surface 10d.

Furthermore, the socket body 10 further includes a pair of projections 8 (e.g., first and second projections). The projections 8 are formed at the lower surface 10b of the socket body 10 at inward locations toward the lengthwise center of the lamp socket LS relative to open bottom ends of the slits 7. the projections 8 protrude downward of the lamp socket LS relative to the lower surface 10b of the socket body 10, and separate the lamp wires 3 in the lengthwise direction Y of the lamp socket LS. The projections 8 prevent portions of the lamp wires 3 that extend below the lamp socket LS from coming within a predetermined distance of each other.

The socket body 10 further includes a fitting leg 9 that is formed in the bottom of the socket body 10. The fitting leg 9 fits into the mounting hole 11 a that is formed in the rear frame 11 of the liquid crystal module. As a result, the lamp socket LS is fixedly mounted in place to the rear frame 11. The lamp wires 3 and the connector 4 at their distal ends are drawn out through the mounting hole 11a behind the rear frame 11.

When the U-shaped cold-cathode tube is attached to the lamp socket LS, the lamp wires 3 with the connector 4 are first connected by the solders 2 to the pin terminals 1a at the end portions of the U-shaped cold-cathode tube 1. Next, the end portions of the U-shaped cold-cathode tube 1 and the pin terminals 1 a are fitted from above into the accommodating concave components 5, and are accommodated and held in place. The lamp wires 3 are drawn slightly upward and then bent back down into reverse U shapes, and these upside-down U-shaped bent parts 3a are supported from below by the wire supports 6 (e.g., concave components). The wire intermediate parts 3b are fitted and held in place in the slits 7 from outside of the lamp socket LS. Furthermore, the distal ends of the lamp wires 3 are drawn downward, thereby the assembly work being completed.

With the lamp socket LS, the connecting work of the U-shaped cold-cathode tube 1 and the lamp wires 3 can become easier. Specifically, when the pin terminals 1a of the U-shaped cold-cathode tube 1 and the lamp wires 3 are connected by soldering, there is no need to pass the lamp wires 3 through holes provided in the bottoms of the lamp socket as is the case with a conventional lamp socket. Since the wire intermediate parts 3b of the lamp wires 3 can be pushed into and fitted into the slits 7 from outside of the outer side surface 10c of the socket body 10 and the lamp wires 3 can be easily drawn downward, the work of drawing the lamp wires 3 downward of the lamp socket LS is also improved in comparison with cases in which the lamp wires and connector are inserted through an opening formed vertically through the middle of the lamp socket and are then drawn downward of the lamp socket. Consequently, with the lamp socket LS, the assembly work the U-shaped cold-cathode tube 1 and the lamp socket LS is greatly improved.

Moreover, the lamp socket LS is designed such that due to the upside-down U-shaped bent parts 3a of the lamp wires 3 being supported from below by the wire supports 6 when the lamp wires 3 are pulled downward, the tension force is borne by the wire supports 6 in the locations of the upside-down U-shaped bent parts 3a of the lamp wires 3. Therefore, the load imposed on the pin terminals 1a at the end portions of the U-shaped cold-cathode tube 1 can be greatly reduced even when the tension force acts on the lamp wires 3. Furthermore, this resolves concerns over the end portions of the U-shaped cold-cathode tube 1 breaking, the solders 2 peeling away, and the connection being compromised. In particular, the supporting surfaces 6a (e.g., bottom surfaces) of the concave components forming the wire supports 6 are formed into curved surfaces that can securely contact with the upside-down U-shapcd bent parts 3a of the lamp wires 3. Thus, the frictional resistance between the upside-down U-shaped bent parts 3a of the lamp wires 3 and the supporting surfaces 6a of the wire supports 6 is increased. As a result, the tension force can be further diminished by this large amount of frictional resistance, and the load imposed on the pin terminals 1a of the U-shaped cold-cathode tube 1 can be further reduced.

With the lamp socket LS, the wire intermediate parts 3b of the lamp wires 3 are held in the slits 7 in the outer side of the socket body 10. Thus, the lamp wires 3 can be separated and drawn downward of the lamp socket LS such that the lamp wires 3 are prevented from coming near or contacting with each other. Therefore, the risk of flames or smoke caused by electric discharge between the lamp wires 3 can be eliminated. Moreover, the projections 8 for separating the lamp wires 3 protrude from the lower surface 10b of the socket body 10. Thus, the portions of the lamp wires 3 that extend below the lamp socket LS are separated such that the lamp wires 3 are prevented from coming near each other within a predetermined distance. As a result, the risk of flames or smoke caused by electric discharge between the lamp wires is further reliably eliminated.

When lamp wires connected to pin terminals of a U-shaped cold-cathode tube are bent into upside-down U shapes and drawn downward from a lamp socket, a possible option is to form an opening passing vertically through the middle of the lamp socket, insert the lamp wires and a connector at their distal ends through this opening, and draw them downward from the lamp socket. However, in this case it is troublesome to insert the lamp wires and the connector through the opening from above, making the cold-cathode tube assembly (an assembly having the U-shaped cold-cathode tube, the lamp socket, and the lamp wires having the connector) more difficult. Furthermore, there is also a danger of flames or smoke being produced by electrical discharge caused by the lamp wires coming near to or in contact with each other.

On the other hand, with the lamp socket LS of this embodiment, a pair of vertical slits 7 are formed in the outer side of the lamp socket LS. Thus, the lamp wires 3 can be separated and drawn downward from the lamp socket LS so as to not come near to or in contact with each other. Furthermore, with a simple operation of merely fitting the wire intermediate parts 3b into the pair of slits 7 from outer side of the lamp socket LS and keeping the wire intermediate parts 3b held in the slits 7. Therefore, the assembly work of the cold-cathode tube assembly is improved. Furthermore, flames and smoke that would be caused by electrical discharge between the lamp wires 3 can be prevented. With the lamp socket LS of this embodiment, the lamp wires 3 can be connected in advance by the solders 2 to the pin terminals 1a of the U-shaped cold-cathode tube 1, and the end portions of the U-shaped cold-cathode tube 1 can be accommodated and held in the accommodating concave components 5 at the ends of the lamp socket LS while the lamp wires 3 are kept facing upward. Thus, the connecting work by soldering is easier than cases in which the lamp wires must be connected by soldering to the pin terminals after being passed through a hole as in a conventional lamp socket. Accordingly, the assembly work of the U-shaped cold-cathode tube 1 can be improved from this respect as well.

Furthermore, with the lamp socket LS, the projections 8 that prevent the lamp wires 3 from coming near to each other are formed toward the lengthwise center from the open bottom ends of the slits 7 in the lower surface 10b of the lamp socket LS. Thus, an advantage is that the risk of flames and smoke caused by electrical discharge between the lamp wires 3 can be more reliably eliminated because the portions of the lamp wires 3 that are drawn downward of the lamp socket LS are separated by the projections 8 so as to not come within a predetermined distance of each other.

Moreover, with the lamp socket LS, the wire supports 6 includes concave components formed in the top end portion of the inside walls 5c of the accommodating concave components 5, and the supporting surfaces 6a thereof are formed into curved surfaces that come in firm contact with the upside-down U-shaped bent parts 3a of the lamp wires 3. Thus, the frictional resistance between the upside-down U-shaped bent parts 3a of the lamp wires 3 and the supporting surfaces 6a of the wire supports 6 increases. The advantage therefore is that when tension force acts on the lamp wires 3, the tension force is further diminished by this large amount of frictional resistance, and the load imposed on the pin terminals 1 a of the U-shaped cold-cathode tube 1 is further reduced.

### GENERAL INTERPRETATION OF TERMS

In understanding the scope of the present invention, the term "comprising" and its derivatives, as used herein, are intended to be open ended terms that specify the presence of the stated features, elements, components and groups, but do not exclude the presence of other unstated features, elements, components and groups. The foregoing also applies to words having similar meanings such as the terms, "including", "having" and their derivatives. Also, the terms "part," "section," "portion," "member" or "element" when used in the singular can have the dual meaning of a single part or a plurality of parts.

While a preferred embodiment have been chosen to illustrate the present invention, it will be apparent to those skilled in the art from these disclosures that various changes and modifications can be made herein without departing from the scope of the invention as defined in the appended claims. Furthermore, the foregoing descriptions of the preferred embodiment according to the present invention are provided for illustration only, and not for the purpose of limiting the invention as defined by the appended claims and their equivalents.

## Claims

1. A lamp socket comprising:
a socket body having a first side surface that faces in a mounting direction of the socket body, a second side surface that oppositely faces from the first side surface, a third side surface that extends between the first and second side surface, and a fourth side surface that oppositely faces from the third surface, the socket body including first and second wiring slits, the first and second wiring slits extending between the first and second side surfaces of the socket body on one of the third and fourth side surfaces of the socket body, respectively,
first and second lamp support components disposed at opposite end portions of the socket body in a lengthwise direction of the lamp socket, respectively, each of the first and second lamp support components having a hollow area that extends in a widthwise direction of the lamp socket that is perpendicular to the lengthwise direction of the lamp socket;
a first wire support component disposed between the first wiring slit of the socket body and the first lamp support component in the lengthwise direction of the lamp socket, the first wire support component having a first groove that is located spaced away from the second side surface of the socket body, and
a second wire support component disposed between the second wiring slit of the socket body and the second lamp support component in the lengthwise direction of the lamp socket, the second wire support component having a second groove that is located spaced away from the second side surface of the socket body.

2. The lamp socket according to claim 1, wherein
the hollow areas of the first and second lamp support components are configured to accommodate end portions of a U-shaped cold cathode tube, respectively, and
the first and second grooves of the first and second wire support components and the first and second slits of the socket body are arranged relative to each other to define first and second wiring paths such that the first and second grooves are configured to support lamp wires along the first and second grooves, one end portions of the lamp wires being electrically coupled to pin terminals that are disposed at the end portions of the U-shaped cold cathode tube, respectively, the other end portions of the lamp wires being electrically coupled to a connector below the second side surface of the socket body, and middle portions of the lamp wires being disposed through the first and second wiring slits, respectively.

3. The lamp socket according to claim 1, further comprising
first and second projections protruding from the first side surface of the socket body, the first and second projections being disposed between lower end openings of the first and second wiring slits on the first side surface of the socket body.

4. The lamp socket according to claim 1, wherein
the first and second grooves of the first and second wire support components have a curved cross sectional shape as viewed in the lengthwise direction of the lamp socket.

5. A liquid crystal module comprising:
a rear frame;
a U-shaped cold cathode tube disposed within the rear frame, the U-shaped cold cathode tube having pin terminals at end portions of the U-shaped cold cathode tube;
a pair of lamp wires electrically coupled to the pin terminals of the U-shaped cold cathode tube at one end portions of the lamp wires, respectively;
a connector electrically coupled to the other end portions of the lamp wires;
a liquid crystal panel disposed above the U-shaped cold cathode tube; and
a lamp socket coupled to the rear frame and supporting the U-shaped cold cathode tube relative to the rear frame, the lamp socket including
a socket body coupled to the rear frame, the socket body having a first side surface that faces in a mounting direction of the socket body, a second side surface that oppositely faces from the first side surface, a third side surface that extends between the first and second side surface, and a fourth side surface that oppositely faces from the third surface, the socket body including first and second wiring slits, the first and second wiring slits extending between the first and second side surfaces of the socket body on one of the third and fourth side surfaces of the socket body, respectively,
first and second lamp support components disposed at opposite end portions of the socket body in a lengthwise direction of the lamp socket, respectively, each of the first and second lamp support components having a hollow area that extends in a widthwise direction of the lamp socket that is perpendicular to the lengthwise direction of the lamp socket, the hollow areas accommodating the end portions of the U-shaped cold cathode tube, respectively,
a first wire support component disposed between the first wiring slit of the socket body and the first lamp support component in the lengthwise direction of the lamp socket, the first wire support component having a first groove that is located spaced away from the second side surface of the socket body, and
a second wire support component disposed between the second wiring slit of the socket body and the second lamp support component in the lengthwise direction of the lamp socket, the second wire support component having a second groove that is located spaced away from the second side surface of the socket body,
the lamp wires extending from the hollow areas of the first and second lamp support components to a rear side of the rear frame via the first and second grooves of the first and second wire support components and the first and second wiring slits of the socket body, respectively.

6. The liquid crystal module according to claim 5, wherein
the lamp socket further includes first and second projections that protrude from the first side surface of the socket body, the first and second projections being disposed between lower end openings of the first and second wiring slits on the first side surface of the socket body.

7. The liquid crystal module according to claim 5, wherein
the first and second grooves of the first and second wire support components have a curved cross sectional shape as viewed in the lengthwise direction of the lamp socket, the curved cross sectional shape corresponding to a cross sectional shape of the lamp wires.
